# EUROPEAN PATENT APPLICATION

(11) **EP 4 708 169 A1**
(43) Date of publication of application: **11.03.2026**
(21) Application number: 25201500.3
(22) Date of filing: 10.09.2025
(51) Int. Cl.: G06Q 10/087, G03B 17/56, G06F 1/16, G06F 18/00, G06Q 10/0875, G06Q 10/10, G06V 20/00, G06V 20/40, G06V 20/52, H04N 7/18, H04N 23/57, H04N 23/60, H04N 23/61, H04N 23/90

(54) **WEARABLE DEVICE FOR ANALYTICS DATA COLLECTION**

(30) Priority: 10.09.2024 US 202463692992 P; 09.04.2025 US 202563786044 P; 09.04.2025 US 202563785767 P; 09.09.2025 US 202519323711; 09.09.2025 WO PCT/US2025/045566
(71) Applicant: Augmodo Inc., Kirkland Washington 98033 (US)
(72) Inventor: FINMAN, Ross Edward, Kirkland, 98033 (US); GU, Kaiwen, Kirkland, 98033 (US)
(74) Representative: Keltie LLP

(57) **Abstract**

A wearable device has a body with one or more connectors for coupling the body to a lanyard. A camera assembly is mounted on the body. The camera assembly includes a pair of cameras configured to capture images of an environment surrounding the wearable device. The wearable device also includes a network adapter to transmit data derived from the captured images to a processing system.

## Description

### CROSS-REFERENCE TO RELATED APPLICATIONS

This Application claims the benefit of U.S. Provisional Patent Application Nos. 63/692,992, filed September 10, 2024, 63/786,044, filed April 9, 2025, and 63/785,767, filed April 9, 2025, which are incorporated by reference.

### BACKGROUND

### TECHNICAL FIELD

The subject matter described relates generally to wearable devices and, in particular, to a wearable device with sensors for capturing data used for evaluating inventory and usage of the space including inventory.

### BACKGROUND INFORMATION

Managing and tracking inventory is a challenging and time-consuming task. A single store may stock thousands of items. Currently, stores and brands often dedicate large amounts of time and resources to monitoring the status of inventory and taking appropriate action in response to observations made. For example, stores need to know when stock of a particular product is low while brands may wish to check that promotions are being applied correctly and what impact they are having on consumer behavior in store. Similarly, stores and brands often expend large amounts of time and effort monitoring consumer behavior while in stores to evaluate the effectiveness of product placement and promotional activities, etc.

### SUMMARY

The above and other problems may be addressed by providing individuals that move around within stores (e.g., employees) with wearable devices that include sensors that capture data regarding inventory status. In one embodiment, the wearable device is a pendant with one or more cameras that capture image data of a retail environment. The image data can be processed on-site and in the cloud to extract valuable analytics, such as product availability, customer behavior, and store layout efficiency. For example, collected image data can be provided an input to one or more machine learning/computer vision models to tackle real-time inventory and out-of-stock problems, such as by constructing realograms reflecting the current placement of products on shelves. In some embodiments, the wearable device may include additional sensors, such as an inertial measurement unit (IMU), that are used to supplement or instead of the image data for determining certain analytics. Although the wearable device is described in the context of a retail environment, it should be appreciated that the same or similar devices may be used in other scenarios where passively gathering information about inventory (or other objects) is valuable, such as in warehouses or factories.

### BRIEF DESCRIPTION OF THE DRAWINGS

FIG. 1 is a block diagram of a networked computing environment including wearable devices, according to one embodiment.
FIG. 2A is a front view of an example wearable device with a pair of cameras, according to one embodiment.
FIG. 2B is a side view of the example wearable device, according to one embodiment.
FIG. 3 is a front view of a second example wearable device with a pair of primary cameras and an additional camera, according to one embodiment
FIG. 4 is a block diagram of a wearable device, according to one embodiment.
FIG. 5 is a block diagram of a base station, according to one embodiment.
FIG. 6 is a block diagram of a charging dock, according to one embodiment.
FIG. 7 is a block diagram illustrating an example of a computer suitable for use in the networked computing environment of FIG. 1, according to one embodiment.

### DETAILED DESCRIPTION

The figures and the following description describe certain embodiments by way of illustration only. One skilled in the art will readily recognize from the following description that alternative embodiments of the structures and methods may be employed without departing from the principles described. Wherever practicable, similar or like reference numbers are used in the figures to indicate similar or like functionality. Where elements share a common numeral followed by a different letter, this indicates the elements are similar or identical. A reference to the numeral alone generally refers to any one or any combination of such elements, unless the context indicates otherwise.

### EXAMPLE SYSTEMS

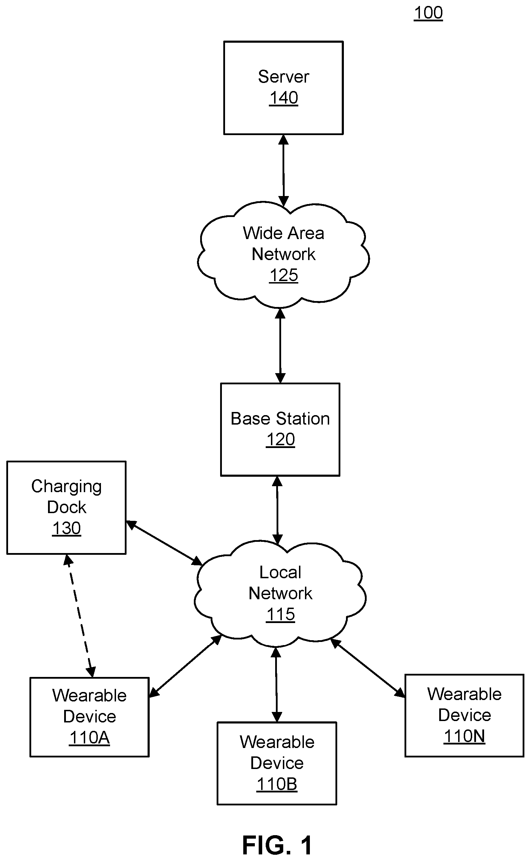

FIG. 1 illustrates one embodiment of a networked computing environment 100 in which wearable devices 110 may be used to collect data that is fed into one or more machine learning/computer vision models for real-time inventory management. In the embodiment shown, the networked computing environment 100 includes a set of wearable devices 110, a base station 120, a charging dock 130, and a server 140. The wearable devices 110, base station 120, and charging dock 130 are all connected to a local network 115 and the base station 120 is connected to the server 140 via a wide area network 125 (e.g., the internet). The charging dock 130 may also communicate with wearable devices 110 when they are docked in the charging dock 130 (e.g., via a USB connection). In other embodiments, the networked computing environment 100 includes different or additional elements. For example, although three wearable devices 110 are shown (a first wearable device 110A, a second wearable device 110B, and an Nth wearable device 100N), the networked computing environment 100 can include any number of such devices. In addition, the functions may be distributed among the elements in a different manner than described.

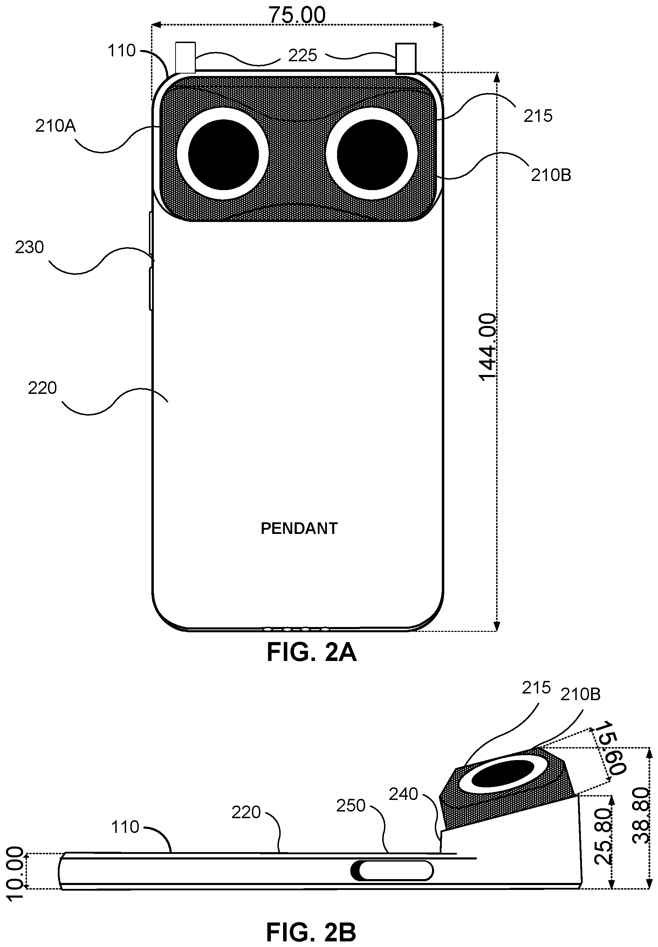

The wearable devices 110 include one or more sensors that collect data describing the environment around the wearable device as the wearer moves around in the environment. In one embodiment, a wearable device 110 is a smart badge that hangs around a wearer's neck on a lanyard. Other example wearable devices include hats, pendants, pin-on devices, and magnetically-attachable devices. The wearable device 110 is designed to be worn as the wearer moves around a facility and captures sensor data (e.g., images) describing objects on the shelves of the facility. The wearable device 110 performs initial processing on the sensor data and sends the processed data to the base station 120 via a local network 115. Additionally or alternatively, the wearable device 110 may send some or all of the processed (or unprocessed) data directly to the server 140 via a wide area network 125. Various embodiments of wearable device 110 and data processing that is performed are described in greater detail below, with reference to FIGS. 2 through 6.

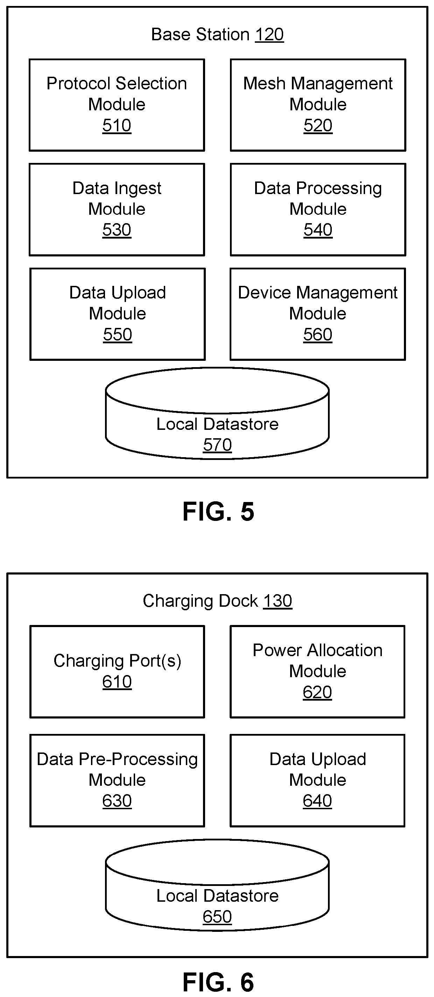

The base station 120 is a computing device that is typically located on the premises (e.g., a retail store or other facility) where the wearable devices 110 are used. In one embodiment, the base station 120 receives processed sensor data from wearable devices 110 over a local network 115 (e.g., via a Wi-Fi connection). The base station 120 can perform additional processing on the data and then send the processed data to the server 140. This additional processing may include aggregating, compressing, encrypting, filtering, or the like. Various data processing operations that may be performed by the base station 120 are described in greater detail below with reference to FIG. 5.

The charging dock 130 is a device with one or more charging ports to which wearable devices 110 may be connected to recharge their batteries. The charging dock 130 can be scaled to accommodate various numbers of wearable devices 110. The charging dock 130 may also provide an interface for transferring data collected by wearable devices 110 to the base station 120 or server 140, such as in scenarios where a wearable device 110 could not transfer data directly to the base station 120 due to network or power limitations. The charging dock 130 may also provide data aggregation or preprocessing functionality for data received from wearable devices 110. In one embodiment, the charging dock 130 uses a modular design in which additional charging ports, external antennas, or onboard storage may be added as the demands of a particular deployment increase. Various embodiments of the charging dock 130 are described in greater detail below with reference to FIG. 6.

The server 140 is one or more computing devices that analyze the processed sensor data received from the base station 120 or wearable devices 110. The server 140 provides cloud-based analysis of the processed sensor data to extract relevant insights. In one embodiment, the server 140 extracts retail insights such as aisle congestion, product placement effectiveness, and customer interaction with products. The server 140 may also identify inventory issues, such as products that are sold out or close to being sold out. For example, the server may generate and maintain a realogram that represents the real-time placement of products within a retail store, enabling the identification of inventory issues and the extraction of relevant insights over time (e.g., the impact of placement or special offers on the sales metrics for products). In some embodiments, the server 140 tags images or video clips with identified products to provide a searchable index that users can access via a web interface to access images or video clips of particular products in particular stores with date and time stamps.

The networks 115 and 125 provide the communication channels via which the other elements of the networked computing environment 100 communicate. A network can include any combination of wired or wireless communication systems. In one embodiment, the networks 115 and 125 use standard communications technologies and protocols. For example, the networks 115 and 125 can include communication links using technologies such as Ethernet, 802.11, worldwide interoperability for microwave access (WiMAX), 3G, 4G, 5G, code division multiple access (CDMA), digital subscriber line (DSL), etc. Examples of networking protocols used for communicating include multiprotocol label switching (MPLS), transmission control protocol/Internet protocol (TCP/IP), hypertext transport protocol (HTTP), simple mail transfer protocol (SMTP), and file transfer protocol (FTP). Data exchanged over the networks 115 and 125 may be represented using any suitable format, such as hypertext markup language (HTML) or extensible markup language (XML). In some embodiments, some or all of the communication links of the networks 115 and 125 may be encrypted using any suitable technique or techniques.

### EXAMPLE WEARABLE DEVICES

FIGs. 2A and 2B illustrate an example pendant-style wearable device 110, according to one embodiment. The example wearable device has a camera assembly 215 that includes a first camera 210A and a second camera 210B (collectively a pair of cameras 210), according to one embodiment. The camera assembly 215 is mounted on the body 220 of the wearable device 110. In some embodiments, the body 220 includes an angled platform 240 that projects the camera assembly 215 away from the rest of the body and orients the camera assembly such that the pair of cameras 210 are angled downwards when the wearable device 110 is worn. The wearable device 110 may include one or more controls 230, 250 located on one or both sides of the pendant-style device. It should be appreciated that controls 230, 250 may also be located on other surfaces of the wearable device 110.

The example wearable device 110 shown in FIGs. 2A and 2B may be connected to a lanyard using one or more connectors 225 (e.g., loops through which a lanyard can be threaded or bars/protrusions to which a lanyard can be clipped). The wearable device 110 may also be configured to hold an employee's ID badge, such as by sliding the ID badge into grooves 260A, 260B that hold the ID badge in place on the front surface of the body 220 of the wearable device 110. In other embodiments, other types of connectors may be used, such as clips, adhesive, magnets, or any other suitable connector, enabling easy integration with existing systems for employees to wear ID badges on lanyards. Note that FIGs. 2A and 2B show example dimensions of the wearable device 110 in millimeters, but it should be appreciated that a wide range of sizes and shapes are possible.

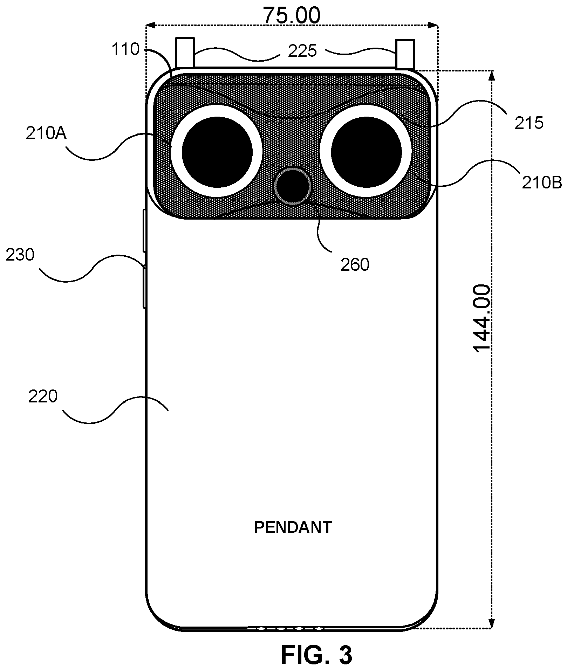

FIG. 3 illustrates a second example wearable device 110, according to one embodiment. The second example wearable device 110 is broadly similar to the first example wearable device 110 shown in FIGs. 2A and 2B but has an additional optical sensor 260 (e.g., an additional camera) included in the camera assembly 215. In some embodiments, the additional optical sensor 260 is a camera that uses less power (e.g., has a lower resolution) than the first and second cameras 210. The additional optical sensor 260 may be configured to continuously capture data regarding the environment of the wearable device 110 and determine when to activate the main cameras 210. For example, if the additional optical sensor 260 indicates that the view of the environment that can be captured by the camera assembly 215 has changed by more than a threshold amount since the cameras 210 were last activated, the cameras may be activated to capture one or more images of the environment. For example, a low-cost image comparison algorithm may be used to compare a previous image captured by the lower power camera at a time that the main cameras 210 were previously activated to a current image captured by the lower powered camera and if the current image differs from the previous image by at least a threshold amount then the main cameras 210 may be activated. In this way, the power consumption of the wearable device 110 can be reduced by decreasing the number of duplicate or substantially identical images captured by the main cameras 210.

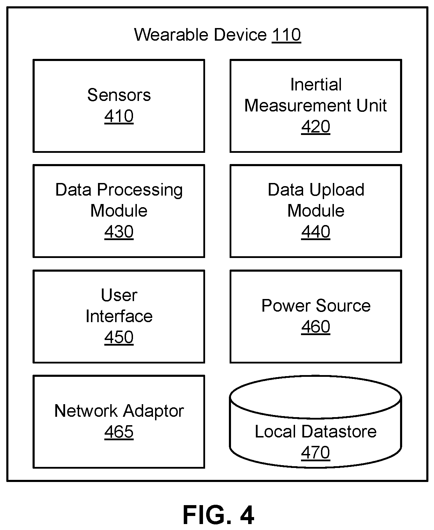

FIG. 4 is a functional block diagram of one embodiment of the wearable device 110. In the embodiment shown, the wearable device 110 includes one or more sensors 410, an inertial measurement unit 420, a data processing module 430, a data upload module 440, a user interface 450, a power source 460, a network adaptor 465 and a local datastore 470. In other embodiments, the wearable device 110 includes different or additional elements. In addition, the functions may be distributed among the elements in a different manner than described.

The sensors 410 gather data describing the environment around the wearable device 110 as the wearer moves around in the environment. The sensors 410 may include one or more main cameras. In one embodiment, the main cameras are positioned and oriented to capture the shelves in a retail store as the wearer walks through the aisles of the retail store. This may be achieved by a single wide-angled camera that points forward or a pair of cameras with one angled to the left and the other to the right (e.g., cameras having a 140°-160° vertical field of view (VFOV) and 70°-85° horizontal field of view (HFOV) set at a 10°-20° downward angle and positioned 30°-45° apart), or any other suitable configuration of cameras. The main cameras may be 4K cameras that use a large aperture and high ISO settings to minimize motion blur. In some embodiments, the sensors 410 may include an additional image sensor that has a low power requirement (e.g., a small, resolution camera) that may be used to determine when to turn on the main cameras. Alternatively, rather than including an additional sensor, one or more of the main cameras may operate in a low-power (e.g., low-resolution) mode to determine when to transition into a higher-power (e.g., high-resolution) mode, and potentially activate additional main cameras. For example, in low power mode, one main camera may operate in a low-resolution mode and a second main camera may be switched off, and in the corresponding high-power mode both main cameras may operate in a high-resolution mode. The sensors 410 may additionally or alternatively include one or more other types of sensors, such as lidar sensors, time of flight sensors, or any other sensors that generate data describing the environment.

The IMU 420 captures data describing the motion of the wearable device 110. The IMU 420 can include one or more gyroscopes, accelerometers, or magnetometers to determine how the wearable device 110 is moving. In one embodiment, the motion data is used to disable the camera or cameras when the wearable device 110 is not moving. This preserves battery power by not expending energy capturing numerous images that will be substantially identical to each other. In some embodiments, the motion data is used to determine or aid in the determination of the orientation and location of the wearable device 110 within the environment (e.g., what aisle of a retail store the wearable device 110 is currently in and in what direction it is pointing). The motion data may also be used to determine when to upload data to the base station 120, as described in greater detail below.

The data processing module 430 processes the data generated by the sensors 410. In one embodiment, the images captured by one or more cameras are processed by an image signal processor (ISP). In cases where there is more than one camera, the images captured by each can be time-synchronized (e.g. using time stamps). The ISP can fuse the time-synchronized images from the cameras to generate a composite image (e.g., showing both sides of the aisle in which the wearable device 110 is located). The composite image may be tagged with metadata indicating which aisle the wearable device is currently located (e.g., based on localization performed using the camera images, information from the IMU 420, or both). It should be noted that although various data processing has been described as being performed on the wearable device 110, some or all of this processing may be performed by the base station 120, charging dock 130, or server 140.

In some embodiments, the data processing module 430 may trigger behavior changes of the wearable device 110 based on analysis of the captured images. For example, entryways to private areas may be marked with visible indicia (e.g., a QR code) and if the visible indicia are detected in an image, the data processing module 430 may automatically disable the cameras. Similarly, if the data processing module 430 determines that the conditions (e.g., light level) make the captured images unsuitable for analysis, image capture by the cameras may be paused.

In various embodiments, the data upload module 440 uploads the processed sensor data to the base station 120 via a local network 115. The data upload module 440 may limit data upload to times when the IMU 440 indicates that the wearable device 110 is currently static. This can enable the compute and power requirements of the wearable device 110 to be minimized as the wearable device 110 need not both collect/process sensor data and upload processed sensor data at the same time. Additionally or alternatively, the data upload module 440 may consider one or more metrics indicating network or power conditions to determine whether to upload the processed sensor data. For example, the data upload module 440 may elect to not upload data if either of a network bandwidth metric or an available power metric is below a corresponding threshold.

Additionally or alternatively, the data upload module 440 may transfer sensor data to the charging dock 130 when the wearable device 110 is charging, and the charging dock 130 may then transfer the sensor data on to the base station 120. For example, if at the time the wearable device is connected to the charging dock 130 it has processed sensor data that was not uploaded to the base station 120 (e.g., because network bandwidth or wearable device power was limited), the processed data may be transferred to the charging dock 130, which then sends it on to the base station 120. The charging dock 130 may perform some additional preprocessing of the processed sensor data before sending it to the base station 120 to reduce the load on the base station 120 as well as the network bandwidth required.

The user interface 450 is one or more buttons or other controls on the wearable device 110 that enable user control of the functionality. In one embodiment, the user interface 450 includes a pause button that the user may press that pauses the capture of sensor data (e.g., for privacy reasons). Pressing the pause button may pause the capture of sensor data for a predetermined amount of time (e.g., five minutes) or until the user presses the pause button a second time. In the former case, the user interface 450 may include an audible or visual indicator that notifies the user when recording will begin again (e.g., providing a ten second countdown) which the user may override by pressing the pause button again. In some embodiments, the user interface 450 also includes visual or audible indications of other events, such as a low power notification when the wearable device 110 is close to needing to be recharged. The user interface 450 may also include a power on/off button and one or more controls for customizing behavior of the wearable device using programmable functions, such as configuring the duration of the pause when the pause button is pressed, causing capture of an image, activating an intercom function, generating a security/panic alert, or triggering any other subroutine or function provided on the wearable device 110.

The power source 460 provides the power for the other components of the wearable device 110 to operate. In one embodiment, the power source 460 is a rechargeable battery. The battery can be recharged when the wearable device 110 is connected to the charging dock 130.

The network adaptor 465 enables the wearable device 110 to transmit data via one or more network protocols to other components of the networked computing environment 100. For example, the network adaptor 465 may include hardware, software, and/or firmware for one or more of Wi-Fi, Bluetooth^{®}, infrared, or cellular data transmissions.

The local datastore 470 is one or more non-transitory computer-readable media that can store sensor data captured by the sensors 410 and processed by the data processing module 430. For example, if processed sensor data is not immediately uploaded to the base station 120, the processed sensor data may be stored in the local datastore 470 for later upload. In one embodiment, the local datastore 470 includes one or more solid state memory chips that store the processed sensor data until it is uploaded. Once data has been uploaded, it may be immediately deleted or stored for a period of time to provide redundancy against upload failures.

### EXAMPLE INFRASTRUCTURE DEVICES

FIG. 5 illustrates one embodiment of a base station 120. In the embodiment shown, the base station 120 includes a protocol selection module 510, a mesh management module 520, a data ingest module 530, a data processing module 540, a data upload module 550, a device management module 560, and a local datastore 570. In other embodiments, the base station 120 may include different or additional components. Furthermore, the functionality may be distributed differently than described. For example, some or all of protocol selection, mesh management, data processing, and device management may be provided by or in conjunction with the charging dock 130.

The protocol selection module 510 manages how data is received from wearable devices 110. The base station 120 may be configured to receive data via Wi-Fi and RF transmissions. The base station 120 may use off-the-shelf Wi-Fi chipsets but a customized protocol stack for more efficient spectrum use and specialized communication modes. In one embodiment, the base station 120 supports multiple frequency bands for Wi-Fi, RF, or both, such as 900 MHz, 2.4 GHz, and 5 GHz Wi-Fi and 5 MHz, 10 MHz, etc. for RF, to provide enhanced range, penetration, and throughput. The protocol selection module 510 may dynamically select one or more modalities of data transfer to optimize performance under varied conditions. For example, sub-GHz (e.g., 900 MHz) Wi-Fi may be selected to provide extended range (e.g., in large retail stores or warehouses) while higher frequency bands may be selected to provide higher data rates for delivery of video or other large files. The protocol selection module 510 may provide configurable bandwidths for customized bandwidth use and use frequency-hopping spread spectrum (FHSS) or adaptive channel switching to reduce interference and improve link reliability. Generally, narrower channels may be leveraged to increase transmission distance or penetrate through obstacles, while wider channels are used for higher throughput or video data.

In some embodiments, the base station 120 adapts standard 802.11 PHY layers to send and receive data under a specialized MAC layer, optimizing for latency, packet structure, and QoS priorities. This may enable tapping into existing Wi-Fi hardware modules, minimizing hardware redesign while still achieving robust, low-latency broadcast capability and also allow for point-to-multipoint communications, where one transmitter can simultaneously broadcast to multiple receivers. The customized protocol stack may enable real-time video streaming (e.g., from wearable cameras or security devices) using codec-agnostic payloads at variable bitrates. This can include buffering and error-correction strategies tailored for continuous, reliable HD or near-HD video feeds, even in congested or harsh RF conditions. An adaptive bit rate (ABR) may be used for streaming, automatically scaling resolution or frame rate to maintain stable video under fluctuating link quality.

In some embodiments, the protocol selection module 510 monitors network noise levels in real time to enable automated hopping between available channels to dodge interference from co-located systems or congested Wi-Fi networks. The protocol selection module 510 may employ listen-before-talk (LBT) protocols to reduce disruption to other spectrum users and maintain regulatory compliance in shared bands. By monitoring network behavior, the protocol selection module 510 may also enable coexistence or interoperability with additional custom RF layers (e.g., LoRa, BLE, Zigbee) for specialized low-power sensor data. For example, by employing intelligent scheduling of time slots or frequency blocks for different protocols, the protocol selection module 510 can reduce collisions and optimize overall throughput. The protocol selection module 510 may also use channel-bonding or channel-aggregation where feasible to merge multiple narrower channels into a broader "virtual" channel for higher peak speeds.

The customized protocol stack may use strong forward error correction (FEC) algorithms with advanced modulation schemes to maintain link integrity at extended ranges. The protocol selection module 510 may fine-tune transmit power and receiver sensitivity, balancing regulatory constraints with system performance to achieve reliable, long-distance connectivity. This can help provide robust coverage in demanding environments-such as large retail floors, outdoor inventory lots, or multi-building campuses.

The mesh management module 520 manages communication routing between wearable devices 110 and other components of the system to maximize coverage where direct upload of data from a wearable device 110 to the base station 120 is not practical due to network conditions or power limitations. The mesh management module 520 may facilitate routing of data transfers to the base station 120 from a wearable device 110 via one or more other wearable devices, a charging dock 130, or both. In one embodiment, the mesh management module 520 monitors network connectivity of devices in the mesh and maintains an up-to-date routing table, acting as a central brain for routing within the mesh. The mesh management module 520 can select routing options to balance network load across multiple hops to improve coverage and reliability in expansive facilities.

The data ingest module 530 receives data from the various modalities provided by the protocol selection module 510 and aggregates them into a single queue for processing. In some embodiments, the data ingest module 530 may perform initial filtering and error checking, such as checking device and packet identifiers to deduplicate the data and identify missing packets, etc. The received data may be queued for processing using a first in, first out (FIFO) approach, by prioritizing data from certain devices (e.g., data received from wearable devices in a part of the facility for which existing data is stale), or using any other suitable ordering approach. In some embodiments, the data ingest module 530 supports parallelization of data processing, placing received data into two or more queues to be processed in parallel.

The data processing module 540 processes the data received from wearable devices 110. The data processing module 540 may perform one or more of: aggregating data from multiple wearable devices 110, filtering the data to reduce the amount sent to the server 140, applying privacy screening to remove identifying information and other sensitive information from the data to be sent to the server, compressing the data to be sent to the server to reduce the bandwidth required, or encrypting the data to be sent to the server. In one embodiment, the data processing module 540 prepares and processes the data received from wearable devices 110 to generate training data sets for one or more machine-learning/computer vision models. For example, these training sets may be used to train a model for real-time inventory and out-of-stock detection. The trained models may also be used to present inventory data as a realogram providing insight into the actual placement of products on shelves. It should be appreciated that other data processing may also be applied by the data processing module 540 to meet the requirements or preferences provided for a particular deployment.

The data processing module 540 may aggregate data from multiple wearable devices 110 to create sets of data based on time (e.g., time stamps of images), location (e.g., location metadata indicating where the data was captured as provided by an indoor positioning system), analysis of the data (e.g., image analysis to identify images that correspond to similar locations within a facility), or any other suitable technique. The aggregation may create sets of data of a predetermined size or, alternatively, aggregate any data that meets one or more conditions for a corresponding set.

To reduce the amount of data provided to the server 140 (and thus reduce network bandwidth usage), the data processing module 540 may filter the received data to remove data that is duplicative or otherwise provides low value. In one embodiment, the data processing module 540 receives images from cameras of wearable devices and performs image analysis to identify images that have substantial overlap with regard to what portion of an environment they depict. For example, if the images are frames of a video, the data processing module 540 may flag a first frame of the video to keep and then remove any following frames that have a field of view that overlaps with the first frame by at least a threshold amount. Once the image processing module 540 finds a second frame that does has a field of view that overlaps with the field of view of the first frame by less than the threshold amount, it may flag the second frame to keep and repeat process, removing further frames that have overlapping fields of view (by at least the threshold amount) with the second frame, etc. In this way, a large number of frames may be removed, significantly reducing the amount of data sent to the server 140, without significantly impacting the scope of coverage of the environment provided by the frames that are sent to the server 140. It should be appreciated that other methods for identifying low value data to be filtered out may be used, such as calculating a similarity score between images (e.g., using a trained neural network) and discarding images that have more than a threshold similarity or calculating a quality score (e.g., using a trained neural network) indicating a data quality of an image and discarding images predicted to be of low quality (e.g., having poor lighting, including significant obstructions in the view of shelves, or depicting areas that are not of interest or private, such as outside of the facility or in a back room, etc.).

The data processing module 540 may also perform privacy screening on sensor data to remove PII or other sensitive data. In one embodiment, the data processing module 540 applies a trained model (e.g., a neural network) to images to identify potentially sensitive areas, such as the faces of people in the facility, vehicle license plates, legal documents (e.g., government IDs), or the like. Any areas identified by the model as potentially sensitive may be redacted (e.g., by applying Gaussian noise or blacking out the identified portion of the image). By performing this processing on premises at the base station 120, the sending of sensitive information to server 120 can be eliminated or substantially reduced.

Once data has been identified to send to the server 140, the data processing module 540 may apply compression to reduce the bandwidth requirements of sending the selected data to the server and provide data security.

The data upload module 550 sends data selected and processed by the data processing module 540 to the server 140 (e.g., via the wide area network 125). The data upload module 550 may use existing in-store Wi-Fi to send the data to the server or a dedicated communication channel (where available). In some embodiments, the data upload module 550 prioritizes data to send to the server 140 based on operational needs. For example, if the server 140 has stale data (e.g., more than one hour old) for one part of a facility but current (e.g., less than one hour old) data for another part of the facility, the data upload module 550 may prioritize sending data relating to the first part of the facility to the server.

The device management module 560 provides an interface for management of wearable devices 110. For example, an operator may connect to the device management module using an app on a smartphone or other client device to provide configuration changes to wearable devices 110 with the device management module 560 distributing updates to the wearable devices over appropriate communication channels (e.g., a combination of providing updates via the charging dock 130, Wi-Fi, and RF transmissions). Updates may include software and firmware updates (which may be scheduled to be provided during low-demand time periods, such as when the facility is closed at night, to minimize disruption). Conversely, critical updates, such as security patches, may be pushed out to wearable devices 110 as soon as possible. The device management module 560 may also collect diagnostic data or status reports from wearable devices 110 to aid in detection of hardware failure or sensor anomalies early. The device management module 560 may also alter settings of wearable devices 110, such as changing sensor sampling rates, adjusting display brightness (for wearable devices with displays), and changing power usage parameters (e.g., switching to a low power mode where charging opportunities are predicted to be limited in the immediate future).

The local datastore 570 is one or more non-transitory computer-readable media that store the data received and processed by the base station 120. In one embodiment, the local datastore 570 includes one or more flash memories or solid state drives (SSDs). The local datastore 570 may buffer processed data received from wearable devices 110 when the wide area network 125 is busy or offline to enable batch uploads. This may optimize bandwidth usage by restricting bandwidth-intensive uploads to times when other demands on the network are low. Furthermore, this local buffering reduces the risk of data loss due to intermittent connections and may provide a backup for auditing that data received by the server 140 is valid.

FIG. 6 illustrates one embodiment of a charging dock 130. In the embodiment shown, the charging dock 130 includes one or more charging ports 610, a power allocation module 620, a data pre-processing module 630, a data upload module 640, and a local datastore 650. In other embodiments, the charging dock 130 includes different or additional components. Furthermore, the functionality may be distributed between components differently than described.

The charging ports 610 enable connection of wearable devices 110 to the charging dock 130 to recharge their power sources 460. The charging ports 610 may also provide a data connection for offload of sensor data (e.g., in scenarios where a wearable device 110 could not send data to the base station via Wi-Fi or RF due to power or bandwidth constraints). In one embodiment, the charging ports are USB connections, but any suitable connection may be used, including specialized, bespoke connectors.

In some embodiments, the charging dock 130 may have Wi-Fi or RF connectivity to wearable devices 110. Thus, rather than wearable devices 110 sending data directly to the base station 120, some or all of the wearable devices may send data to the charging dock 130, which sends it on to the base station 120 (or directly to the server 140). In this way, the charging dock 130 can act as a Wi-Fi extender or repeater to provide improved coverage in large facilities or in the presence or poor connectivity due to obstructions or other interference.

The charging dock 130 may use intelligent power allocation to optimize the charging of wearable devices 110. The power allocation module 620 may monitor the battery status of each docked wearable device 110 in real time and automatically adjust charging parameters based on priority, battery health, or operational demands. In one embodiment, the power allocation module 620 prioritizes charging wearable devices 110 with lower battery levels. Additionally or alternatively, the power allocation module 620 may monitor battery level for all wearable devices 110 (e.g., via the local area network 115) and make charging decisions based on predicted needs. For example, if an upcoming shift is scheduled to have four employees working and only two wearable devices have high battery levels, the power allocation module 620 may prioritize charging two additional wearable devices that currently have low battery levels whereas if four wearable devices 110 already have high battery levels the power allocation module 620 may prioritize adding charge to as many batteries as possible. The intelligent power allocation may also provide power saving modes for scenarios where network or power resources are constrained.

The data pre-processing module 630 may perform pre-processing on data received from wearable devices 110 before sending the data on to the base station 120 (or directly to the server 140). Generally, the data pre-processing module 630 may perform some or all of the data processing described previously with reference to the data processing module 540 of the base station 120. How data processing is distributed between the base station 120 and charging dock 130 may be predetermined or determined dynamically (e.g., based on available network bandwidth and processing power). Similarly, other functionality described previously with reference to the base station 120 (e.g., wearable device management) may additionally or alternatively be provided by the charging dock 130.

The data upload module 640 sends data received (and processed) by the charging dock 130 to the base station 120 (or server 140). In general, the data upload module 640 may adopt data buffering and prioritization in a similar manner as described above with reference to the data upload module 550 of the base station 120.

### COMPUTING SYSTEM ARCHITECTURE

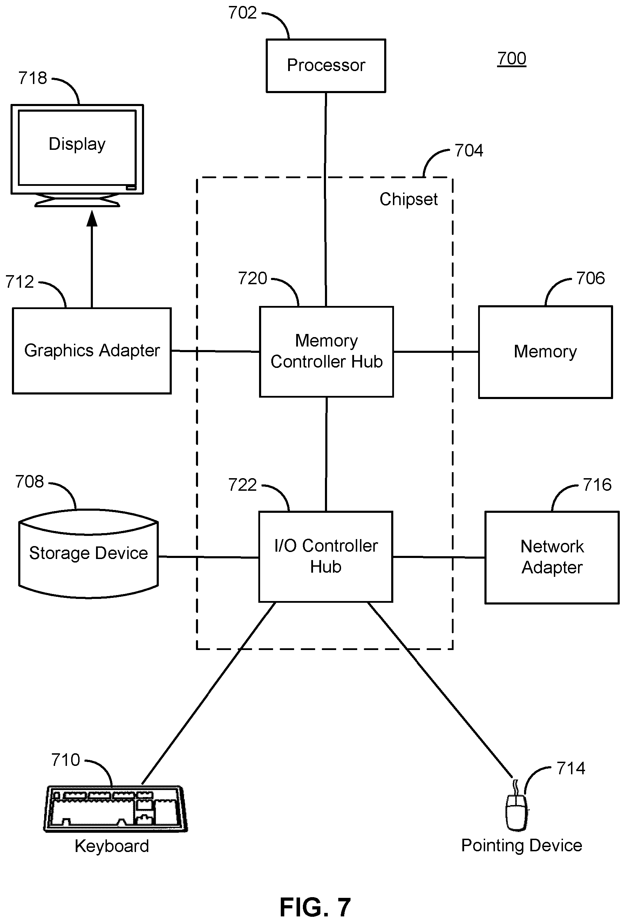

FIG. 7 is a block diagram of an example computer 700 suitable for use in the networked computing environment 100 of FIG. 1. The example computer 700 includes at least one processor 702 coupled to a chipset 704. The chipset 704 includes a memory controller hub 720 and an input/output (I/O) controller hub 722. A memory 706 and a graphics adapter 712 are coupled to the memory controller hub 720, and a display 718 is coupled to the graphics adapter 712. A storage device 708, keyboard 710, pointing device 714, and network adapter 716 are coupled to the I/O controller hub 722. Other embodiments of the computer 700 have different architectures.

In the embodiment shown in FIG. 7, the storage device 708 is a non-transitory computer-readable storage medium such as a hard drive, compact disk read-only memory (CD-ROM), DVD, or a solid-state memory device. The memory 706 holds instructions and data used by the processor 702. The pointing device 714 is a mouse, track ball, touchscreen, or other type of pointing device, and may be used in combination with the keyboard 710 (which may be an on-screen keyboard) to input data into the computer system 700. The graphics adapter 712 displays images and other information on the display 718. The network adapter 716 couples the computer system 700 to one or more computer networks, such as networks 115 and 125.

The types of computers used by the entities of FIGS. 1, 4, 5, and 6 can vary depending upon the embodiment and the processing power required by the entity. For example, the server 110 might include multiple blade servers working together to provide the functionality described while wearable devices 110 might include integrated circuits or chips for processing data but have minimal I/O functionality, lacking some of the components described above, such as keyboards 710, graphics adapters 712, and displays 718.

### ADDITIONAL CONSIDERATIONS

Some portions of above description describe the embodiments in terms of algorithmic processes or operations. These algorithmic descriptions and representations are commonly used by those skilled in the computing arts to convey the substance of their work effectively to others skilled in the art. These operations, while described functionally, computationally, or logically, are understood to be implemented by computer programs comprising instructions for execution by a processor or equivalent electrical circuits, microcode, or the like. Furthermore, it has also proven convenient at times, to refer to these arrangements of functional operations as modules, without loss of generality.

Any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment. Similarly, use of "a" or "an" preceding an element or component is done merely for convenience. This description should be understood to mean that one or more of the elements or components are present unless it is obvious that it is meant otherwise.

Where values are described as "approximate" or "substantially" (or their derivatives), such values should be construed as accurate +/- 10% unless another meaning is apparent from the context. For example, "approximately ten" should be understood to mean "in a range from nine to eleven."

The terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

Upon reading this disclosure, those of skill in the art will appreciate still additional alternative structural and functional designs. Thus, while particular embodiments and applications have been illustrated and described, it is to be understood that the described subject matter is not limited to the precise construction and components disclosed. The scope of protection should be limited only by any claims that ultimately issue.

Further features and aspects of the embodiments of the present disclosure may reside in the below clauses.

In one aspect, there is provided a wearable device comprising: a body having one or more connectors configured to couple the body to a lanyard; a camera assembly including a pair of cameras mounted on the body, the pair of cameras configured to capture images of an environment surrounding the wearable device; and a network adapter configured to transmit data derived from the captured images to a processing system.

In some embodiments of this aspect, the body includes a front surface configured to attach to an identification badge.

In some embodiments, the camera assembly may further include an additional optical sensor, and wherein the pair of cameras are activated responsive to data captured by the additional optical sensor indicating one or more threshold conditions are met. Additionally, in some embodiments, the additional optical sensor is an additional camera having a lower power consumption than the pair of cameras, and the one or more threshold conditions include that an image captured by the additional camera indicating that a view of the environment capturable by the pair of cameras has changed by at least a threshold amount since the pair of cameras were previously activated.

In some embodiments, the wearable device further comprising an inertial measurement unit, wherein the pair of cameras are configured to activate responsive to the inertial measurement unit indicating that the wearable device has moved at least a threshold amount since the pair of cameras were previously activated.

The pair of cameras may have a 140°-160° vertical field of view and/or a 70°-85° horizontal field of view. In some embodiments, the pair of cameras are set at a 10°-20° downward angle relative to a front face of the body of the wearable device. In some embodiments, the pair of cameras are angled at 30°-45° apart relative to each other.

The camera assembly may be mounted on a platform that projects the camera assembly away from the body. Also the camera assembly may be mounted on a mounting surface of the platform that is angled at 10°-20° relative to a front surface of the body.

The wearable device may further comprise one or more controls disposed on one or more sides of the body.

In some embodiments, the wearable device further comprises a data processing module, the data processing module configured to create composite images from pairs of images. In this case the data processing module may identify pairs of images from which to create composite images based on time stamps attached to the pairs of images.

The wearable device may further comprise a data processing module, the data processing module configured to detect visual indicia indicating a private area in one or more images captured by the pair of cameras and, responsive to detecting the visual indicia, deactivate the pair of cameras.

In some embodiments, the wearable device further comprises a data upload module, the data upload module configured to cause the network adaptor to transmit the data derived from the captured images to the processing system responsive to one or more network bandwidth or power metrics.

In some embodiments, the processing system is a base station that is located within a facility that includes the environment.

The data processing system may use the data to train one or more machine learning/computer vision models to generate a realogram,

In some embodiments, the wearable device further comprises a connection assembly on a same side of the body as the camera assembly, the connection assembly being configured to hold an identification badge. The connection assembly may comprise a pair of grooves into which the identification badge sides into.

## Claims

1. A wearable device comprising:
a body having one or more connectors configured to couple the body to a lanyard;
a camera assembly including a pair of cameras mounted on the body, the pair of cameras configured to capture images of an environment surrounding the wearable device; and
a network adapter configured to transmit data derived from the captured images to a processing system.

2. The wearable device of Claim 1, wherein the body includes a front surface configured to attach to an identification badge.

3. The wearable device of Claim 1 or 2, wherein the camera assembly further includes an additional optical sensor, and wherein the pair of cameras are activated responsive to data captured by the additional optical sensor indicating one or more threshold conditions are met.

4. The wearable device of Claim 3, wherein the additional optical sensor is an additional camera having a lower power consumption than the pair of cameras, and the one or more threshold conditions include that an image captured by the additional camera indicating that a view of the environment capturable by the pair of cameras has changed by at least a threshold amount since the pair of cameras were previously activated.

5. The wearable device of any preceding claim, further comprising an inertial measurement unit, wherein the pair of cameras are configured to activate responsive to the inertial measurement unit indicating that the wearable device has moved at least a threshold amount since the pair of cameras were previously activated.

6. The wearable device of any preceding claim, wherein the pair of cameras have a 140°-160° vertical field of view or wherein the pair of cameras have a 70°-85° horizontal field of view.

7. The wearable device of any preceding claim, wherein the pair of cameras are set at a 10°-20° downward angle relative to a front face of the body of the wearable device or wherein the pair of cameras are angled at 30°-45° apart relative to each other.

8. The wearable device of any preceding claim , wherein the camera assembly is mounted on a platform that projects the camera assembly away from the body, and optionally wherein the camera assembly is mounted on a mounting surface of the platform that is angled at 10°-20° relative to a front surface of the body.

9. The wearable device of any preceding claim, further comprising one or more controls disposed on one or more sides of the body.

10. The wearable device of any preceding claim, further comprising a data processing module, the data processing module configured to create composite images from pairs of images.

11. The wearable device of any preceding claim, wherein the data processing module identifies pairs of images from which to create composite images based on time stamps attached to the pairs of images.

12. The wearable device of any preceding claim, further comprising a data processing module, the data processing module configured to detect visual indicia indicating a private area in one or more images captured by the pair of cameras and, responsive to detecting the visual indicia, deactivate the pair of cameras.

13. The wearable device of any preceding claim, further comprising a data upload module, the data upload module configured to cause the network adaptor to transmit the data derived from the captured images to the processing system responsive to one or more network bandwidth or power metrics.

14. The wearable device of any preceding claim , further comprising a connection assembly on a same side of the body as the camera assembly, the connection assembly configured to hold an identification badge and optionally wherein the connection assembly comprises a pair of grooves into which the identification badge sides into.

15. A system comprising the wearable device of any preceding claim and the processing system, wherein the processing system is a base station that is located within a facility that includes the environment and optionally wherein the data processing system uses the data to train one or more machine learning/computer vision models to generate a realogram,
